# EUROPÄISCHE PATENTSCHRIFT

(11) **EP 3 339 224 B1**
(45) Veröffentlichungstag und Bekanntmachung des Hinweises auf die Patenterteilung: **27.02.2019**
(21) Anmeldenummer: 17020568.6
(22) Anmeldetag: 12.12.2017
(51) Int. Cl.: B65G 65/46

(54) **KANAL- ODER/UND STRASSENREINIGUNGSVORRICHTUNG**
SEWER AND/OR ROAD CLEANING DEVICE
DISPOSITIF DE NETTOYAGE DE CANAUX ET/OU DE ROUTES

(30) Priorität: 22.12.2016 DE 102016015407
(43) Veröffentlichungstag der Anmeldung: 27.06.2018
(73) Patentinhaber: Wiedemann, Karl, 86465 Welden (DE)
(72) Erfinder: Wiedemann, Karl, 86465 Welden (DE)
(74) Vertreter: Munk, Ludwig

(56) Entgegenhaltungen:
- WO-A1-97/29330
- DE-A1-102014 003 018
- DE-C1- 19 715 816
- FR-A1- 2 632 334
- US-A- 2 037 959

## Beschreibung

Die Erfindung betrifft eine Kanal- oder/und Straßenreinigungsvorrichtung mit wenigstens einem fassförmigen Schmutzabfuhrbehälter zur Aufnahme und zum Transport von bei der Kanal- oder/und Straßenreinigung anfallenden mineralischen Rückständen, wobei zum Ausräumen des Schmutzabfuhrbehälters eine diesem zugeordnete Räumeinrichtung vorgesehen ist, die eine in Längsrichtung des Schmutzabfuhrbehälters sich erstreckende, mit einer Drehantriebseinrichtung versehene Förderschneckenanordnung aufweist, die auf einem um eine in Behälterlängsrichtung verlaufende Achse schwenkbar angeordneten, mittels eines Schwenkantrieb schwenkbaren Schwenkrahmen aufgenommen ist, mittels dessen die Förderschneckenanordnung gegenüber einer der Behältersohle zugeordneten Mittelstellung beidseitig entlang der Behälterwandung auslenkbar ist.

Eine Vorrichtung dieser Art ist aus der DE 10 2014 003 018 A1 bekannt. Bei dieser bekannten Anordnung enthält die Räumeinrichtung mindestens eine Förderschnecke, wobei jede Förderschnecke einzeln arbeitet. Insbesondere bei körnigem Material kann es dabei vorkommen, dass das von der Förderschnecke erfasste Material während des Hochschwenkens des die Förderschnecke aufnehmenden Schwenkrahmens zumindest teilweise durch die zwischen den einzelnen Schneckengängen vorhandenen Spalte durchfällt und dass dieses Material bei der anschließenden Rückschwenkbewegung des Schwenkrahmens der hierauf aufgenommenen Förderschnecke zumindest teilweise ausweicht. Ein Entleerungsvorgang kann daher bis zur vollständigen Entleerung des Schmutzabfuhrbehälters vergleichsweise viel Zeit in Anspruch nehmen. Die bekannte Räumeinrichtung arbeitet daher nicht effizient genug.

Hiervon ausgehend ist es daher die Aufgabe der vorliegenden Erfindung, eine Vorrichtung eingangs erwähnter Art mit einfachen und kostengünstigen Mitteln so zu verbessern, dass eine effiziente Arbeitsweise der Räumeinrichtung und damit eine vergleichsweise schnelle Entleerung des Schmutzabfuhrbehälters gewährleistet sind.
Diese Aufgabe wird erfindungsgemäß dadurch gelöst, dass bei einer Kanal- oder/und Straßenreinigungsvorrichtung eingangs erwähnter Art die Förderschneckenanordnung der Räumeinrichtung zwei symmetrisch zu einer Mittellängsebene des Schwenkrahmens auf diesem aufgenommene Förderschnecken aufweist, die zwischen sich einen Spalt begrenzen und zum Transport der mineralischen Rückständen entlang der Innenseite der Behälterwandung zusammenwirken.
Diese Maßnahmen stellen sicher, dass das beim Hochschwenken des Schwenkrahmens durch die jeweils in Schwenkrichtung vordere Förderschnecke durchfallende Material von der nachfolgenden zweiten Förderschnecke erfasst und im durch die beiden Förderschnecken begrenzten Spalt zurückgehalten wird, wo es durch Zusammenwirken der beiden Förderschnecken entlang der den Spalt in radialer Richtung begrenzenden Behälterinnenwand transportiert wird. Dies gilt in vorteilhafter Weise in Folge der symmetrischen Anordnung der den Spalt seitlich begrenzenden Förderschnecken für beide Schwenkrichtungen des Schwenkrahmens und damit für beide Seiten des Schmutzabführbehälters, so dass insgesamt eine vergleichsweise schnelle, vollständige Entleerung des Schmutzabfuhrbehälters erreicht wird, wodurch die durch die Entleerung verursachten Stillstandszeiten der gesamten Vorrichtung verkürzt und damit deren Wirtschaftlichkeit verbessert werden.
Vorteilhafte Ausgestaltungen und zweckmäßige Fortbildungen der übergeordneten Maßnahmen sind in den Unteransprüchen angegeben.

Vorteilhaft können die beiden auf den Schwenkrahmen aufgenommenen Förderschnecken gegenläufig gewendelt und mit im Bereich der Behälterwandung einander zugewandten Drehrichtungen gegenläufig antreibbar sein. Hierdurch wird sichergestellt, dass beide einen Spalt seitlich begrenzende Förderschnecken in jeder Stellung des Schwenkrahmens im Bereich der den Spalt radial begrenzenden Behälterwand in den Spalt hinein fördern und sich damit gegenseitig besonders stark unterstützen, so dass eine besonders hohe Effektivität zu erwarten ist.

In weiterer Fortbildung der übergeordneten Maßnahmen kann der die beiden Förderschnecken aufnehmende Schwenkrahmen gegenüber seiner Mittelstellung um einen Winkel auslenkbar sein, der kleiner als 90° ist, vorzugsweise gegenüber 90° zumindest um die Hälfte des Winkelversatzes der beiden Förderschnecken auf dem Schwenkrahmen reduziert ist. Hierdurch wird erreicht, dass in beiden Schwenkrichtungen des Schwenkrahmens die in Schwenkrichtung jeweils vordere Förderschnecke bis auf eine etwa mittlere Höhe des Schmutzabfuhrbehälters angehoben wird, so dass im Bereich der nach unten sich verengenden, unteren Querschnittshälfte des Behälterinnenraums eine zuverlässige Räumung erfolgt und eine Brückenbildung zuverlässig verhindert wird, so dass das Material aus der nach unten sich erweiternden oberen Querschnittshälfte des Behälterinnenraums nachrutschen kann und damit eine zuverlässige Räumung erfolgt.

Eine weitere vorteilhafte Maßnahme kann darin bestehen, dass der Schwenkrahmen zwei parallele, in Längsrichtung der Förderschnecken voneinander beabstandete, um eine in Behälterlängsrichtung verlaufende, zweckmäßig der Behältermittellängsachse entsprechende Achse schwenkbare Lagerschilde aufweist, die eine zur Behälterwandung hin sich verbreiternde Form aufweisen und auf denen die beiden zugeordneten Förderschnecken mit den Spalt bildendem Abstand gelagert sind. Hierdurch wird eine kompakte Bauweise erreicht. Um einer Durchbiegung der Förderschnecken entgegen zu wirken, kann der Abstand der beiden Lagerschilde kleiner als die Länge der hierauf aufgenommenen Förderschnecken sein.

In weiterer Fortbildung der übergeordneten Maßnahmen kann der Schmutzabfuhrbehälter im Bereich seines hinteren Endes eine mittels eines Schwenkdeckels verschließbare Öffnung aufweisen, der eine das Behälterende unterfassende und seitlich flankierende Schüttblende zugeordnet ist, die zweckmäßig als Rutsche ausgebildet sein kann. Die Schüttblende ergibt in vorteilhafter Weise eine gezielte Führung des aus dem Schmutzabfuhrbehälter herausgeförderten Materials, so dass eine Verschmutzung der Umgebung unterbleibt.

In weiterer Fortbildung der übergeordneten Maßnahmen kann den auf dem Schwenkrahmen aufgenommenen Förderschnecken eine quer hierzu verlaufende Austragschneckenanordnung nachgeordnet sein, die zweckmäßig eine in einem dem mittels eines Schwenkdeckels verschließbaren Ende des Schmutzabfuhrbehälters benachbarten, zweckmäßig der Schüttblende zugeordneten Trog laufende Schnecke aufweist. Hierdurch ist sichergestellt, dass das aus dem Schmutzabfuhrbehälter nach hinten herausgeförderte Räumgut einfach seitlich abtransportiert wird und so in einen neben der Kanal- oder/und Straßenreinigungsvorrichtung platzierten Behälter etc. eingebracht werden kann.

Vorteilhaft kann dabei zur Erhöhung der vom Schmutzabfuhrbehälter abgewandten Seitenwand des Trogs eine dieser zugeordnete, klappbare Schutzblende vorgesehen sein. Diese verhindert zuverlässig, dass das aus dem Schmutzabfuhrbehälter nach hinten ausgebrachte Räumgut nicht über den Trog hinausgeworfen wird, sondern zuverlässig im Trog landet und durch die diesem zugeordnete Schnecke seitlich abgeführt wird.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: einen Querschnitt durch den rückwärtigen Bereich eines Schmutzabfuhrbehälters eines Kanalreinigungsfahrzeugs und
- Figur 2: einen Längsschnitt durch die Anordnung gemäß Figur 1.

Hauptanwendungsgebiet der vorliegenden Erfindung sind Kanal- oder/und Straßenreinigungsfahrzeuge mit einem Schmutzabfuhrbehälter. Der grundsätzliche Aufbau und die Wirkungsweise von Anordnungen dieser Art sind an sich bekannt. Die nachstehenden Ausführungen beziehen sich daher im Wesentlichen auf die erfindungsgemäßen Besonderheiten.

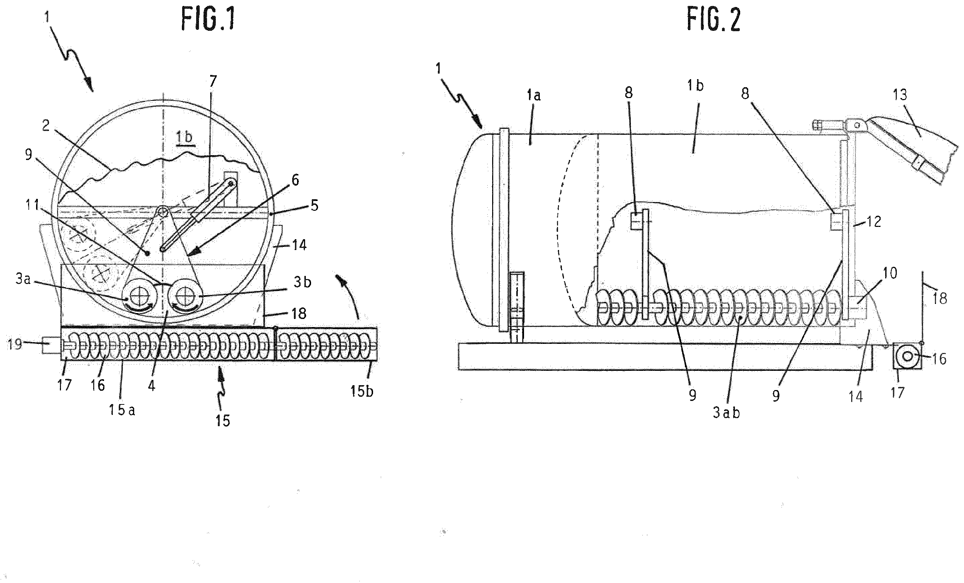

Das in den Figuren 1 und 2 dargestellte Fass 1 gehört zum Aufbau eines hier nicht näher dargestellten Kanal- oder/und Straßenreinigungsfahrzeugs. Das einen kreisförmigen Querschnitt aufweisende Fass 1 ist im dargestellten Beispiel in einen vorderen Wasserbehälter 1a und einen hinteren Schmutzabfuhrbehälter 1b unterteilt. Die dem Wasserbehälter 1a und/oder dem Schmutzabfuhrbehälter 1b zugeordneten Saug- Pump- und Evakuiereinrichtungen sind ebenso wie das zugehörige Fahrzeug zur Vereinfachung der Darstellung nicht gezeichnet.

Die mineralischen Bestandteile des in den Schmutzabfuhrbehälter 1b eingeworfenen Schmutzes sedimentieren und bilden dementsprechend eine mit der Zeit ansteigende Füllung 2, die in Figur 1 durch ihre unregelmäßige Oberfläche angedeutet ist. Zum Entfernen dieser Füllung aus dem Schmutzabfuhrbehälter 1b, d.h. zum Entleeren des Schmutzabfuhrbehälters 1b, ist eine in den Schmutzabfuhrbehälter 1b eingebaute Räumeinrichtung vorgesehen, mittels welcher das die Füllung 2 bildende Material aus dem Schmutzabfuhrbehälter 1b hinaus transportiert werden kann.

Die genannte Räumeinrichtung enthält, wie am besten aus Fig. 1 ersichtlich ist, zwei parallel nebeneinander angeordnete, in Behälterlängsrichtung sich erstreckende Förderschnecken 3a, 3b, die zwischen sich einen hierzu parallelen Spalt 4 einschließen und diesen seitlich begrenzen, der in radial nach außen gehender Richtung durch die Innenseite der Behälterwand 5 begrenzt ist. Die den Spalt 4 seitlich begrenzenden Förderschnecken 3a, 3b sind gemeinsam oder zweckmäßig einzeln antreibbar. Um ein gutes Zusammenwirken der beiden Förderschnecken 3a, 3b zum Abtransport des Räumguts im Spalt 4 zu bewerkstelligen, sind die beiden Förderschnecken 3a, 3b gegenläufig gewendelt und werden, wie durch die Drehpfeile in Fig. 1 angedeutet ist, mit im Bereich der den Spalt 4 radial begrenzenden Behälterwand 5 einander zugewandter Drehrichtung gegenläufig angetrieben.

Die den Spalt 4 seitlich begrenzenden Förderschnecken 3a, 3b sind auf einem, um eine in Längsrichtung des Schmutzabfuhrbehälters 1b verlaufende Achse, hier die Behältermittellängsachse, schwenkbar angeordneten Schwenkrahmen 6 parallel nebeneinander gelagert, der mittels einer in Fig. 1 angedeuteten Schwenkeinrichtung 7 gegenüber einer der Behältersohle zugeordneten, in Fig. 1 mit durchgehenden Linien angedeuteten Mittelstellung nach beiden Seiten so auslenkbar ist, dass die in Auslenkrichtung jeweils vordere Förderschnecke 3a bzw. 3b bis etwa auf die mittlere Höhe des zugeordneten, fassförmigen Schmutzabfuhrbehälters 1b angehoben wird. Die beidseitige Auslenkung des Schwenkrahmens 6 gegenüber der in Fig. 1 mit durchgezogenen Linien angedeuteten Mittelstellung ist daher kleiner als 90°, im dargestellten Beispiel um die Hälfte des gegenseitigen Winkelversatzes der beiden Förderschnecken 3a, 3b auf dem Schwenkrahmen 9 kleiner als 90°.

Der Schwenkrahmen 6 enthält, wie am besten aus Fig. 2 ersichtlich ist, zwei an einer jeweils zugeordneten, in den Schmutzabfuhrbehälter 1b eingebauten Quertraverse 8 um die oben genannte Behältermittellängsachse schwenkbar gelagerte Lagerschilde 9, die in Längsrichtung der zugeordneten Förderschnecken 3a, 3b voneinander distanziert sind. Die Lagerschilde 9 besitzen, wie aus Fig. 1 ersichtlich ist, eine zur Behälterwandung 5 hin sich verbreiternde Form, so dass die beiden Förderschnecken 3a, 3b mit dem Spalt 4 zugeordnetem Abstand hierauf aufnehmbar sind. Durch Aktivierung der Schwenkeinrichtung 7 ist der Schwenkrahmen 6 um seine Achse pendelnd schwenkbar, wobei die den Spalt 4 seitlich begrenzenden Förderschnecken 3a, 3b an der den Spalt 4 radial außen begrenzenden Innenseite der Behälterwand 5 entlang streichen, so dass der Spalt 4 auf dem gesamten, vom Schwenkrahmen 6 zurückgelegten Weg radikal außen begrenzt ist.

Die beiden Förderschnecken 3a, 3b, die sich über die ganze Länge des zugeordneten Schmutzabfuhrbehälters 1b erstrecken, können mit ihren Enden auf den Lagerschilden 9 des Schwenkrahmens 6 gelagert sein. Im dargestellten Beispiel ist der Abstand der Lagerschilde 9 kleiner als die Länge der Förderschnecken 3a, 3b. Durch diese Verkürzung der Abstützung der Förderschnecken 3a, 3b gegenüber ihrer ganzen Länge kann einer Durchbiegung der Förderschnecken 3a, 3b vorgebeugt werden. Im dargestellten Beispiel gemäß Fig. 2 ist ein Lagerschild 9 im Bereich des hinteren Endes des Schmutzabfuhrbehälters 1b angeordnet. Das andere Lagerschild 9 ist vom gegenüberliegenden Ende des Schmutzabfuhrbehälters 1b entfernt. Die Entfernung kann etwa ¼ der Schneckenlänge betragen. Der Abstand der beiden Lagerschilde 9 beträgt hier dementsprechend ¾ der Schneckenlänge, so dass die beiden Förderschnecken 3a, 3b an einem Ende und auf ¾ ihrer Länge gelagert sind.

Die beiden Förderschnecken 3a, 3b laufen im Normalfall synchron. Es wäre daher denkbar, die beiden Förderschnecken mit miteinander kämmenden Stirnrädern zu versehen und nur eine Förderschnecke aktiv anzutreiben. Im dargestellten Beispiel sind beide Förderschnecken 3a, 3b, wie oben schon erwähnt wurde, einzeln antreibbar und hierzu jeweils mit einem zugeordneten Antriebsmotor 10, vorzugsweise in Form eines Hydraulikmotors, verbunden. Dieser kann dem auf dem hinteren Lagerschild 9 gelagerten Schneckenende zugeordnet sein. Dadurch, dass beide Förderschnecken 3a, 3b einzeln antreibbar sind, ist es auch möglich, die Förderschnecken 3a, 3b in Sonderfällen, beispielsweise zur Beseitigung von Verstopfungen, mit unterschiedlichen Geschwindigkeiten und/oder nicht kämmenden Drehrichtungen anzutreiben.

Im Betrieb kann es vorkommen, dass das von der in Schwenkrichtung des Schwenkrahmens 6 vorderen Förderschnecke erfasste und transportierte Gut insbesondere beim Hochschwenken des Schwenkrahmens 6 durch die zwischen den aufeinander folgenden Schneckengängen gebildeten Spalte hindurch fällt. Dieses in den Spalt 4 gelangende Gut wird dabei von der nachfolgenden Förderschnecke erfasst und im Spalt 4 gehalten, wo es durch die Wirkung beider Förderschnecken 3a, 3b vorwärts transportiert wird.

Das von den beiden Förderschnecken 3a, 3b in ihrer Längsrichtung vorwärts transportierte Material wird am in Transportrichtung vorderen Schneckenende, d.h. am hinteren Ende des Schmutzabfuhrbehälters 1 ausgetragen. Um den Vorwärtstransport und den Austrag des von den Förderschnecken 3a, 3b transportierten Räumguts zu erleichtern, ist von den beiden die beiden Förderschnecken 3a, 3b aufnehmenden, zweckmäßig tafelförmigen Lagerschilden 9 zumindest das dem hinteren Ende des Schmutzabfuhrbehälters 1b zugewandte Lagerschild 9 mit einem dem Spalt 4 zugeordneten, in Figur 1 angedeuteten, torförmigen Ausschnitt 11 versehen, der am der Innenseite der Behälterwandung 5 zugewandten Rand des Lagerschilds 9 offen ist. Im dargestellten Beispiel mit gegenüber der Schneckenlänge verkleinertem Abstand der beiden Lagerschilde 9 sind zweckmäßig beide Lagerschilde 9 mit einem torförmigen Ausschnitt 11 vorstehend genannter Art versehen.

Im dargestellten Beispiel ist der Schmutzabfuhrbehälter 1b an seinem hinteren Ende mit einer über seinen ganzen Querschnitt sich erstreckenden Öffnung 12 versehen, der ein schwenkbarer Deckel 13 zugeordnet ist und die durch diesen geöffnet und verschlossen werden kann. Das von den Förderschnecken 3a, 3b transportierte Räumgut wird daher über die Öffnung 12 aus dem Schlammabfuhrbehälter 1b ausgeworfen. Um hier eine gewisse Kanalisierung des nach hinten ausgeworfenen Räumguts zu gewährleisten ist im dargestellten Beispiel eine die Öffnung 12 des Schlammabfuhrbehälters 1b untergreifende und seitlich flankierende Schüttblende 14 vorgesehen. Diese kann zweckmäßig als Rutsche mit nach hinten gerichteter Neigung ausgebildet sein. Um die Wirkung dieser Rutsche zu unterstützen, kann das den Schlammabfuhrbehälter 1b enthaltende Fass 1 an seinem hinteren Ende schwenkbar gelagert und im Bereich seines vorderen Endes mittels eines zugeordneten Huborgans etwas anhebbar sein.

Mit Hilfe der Schüttblende 14 kann das ausgebrachte Räumgut einfach auf einen vorgesehenen Lagerplatz oder in einen untergestellten Behälter abgeworfen werden. Im dargestellten Beispiel wird das durch die Förderschnecken 3a, 3b aus dem Schmutzabfuhrbehälter 1b nach hinten ausgebrachte Räumgut mittels einer den Förderschnecken 3a, 3b nachgeordneten, quer hierzu verlaufenden Austragschneckenanordnung 15 seitlich, d.h. quer zur Behälterlängsrichtung abtransportiert, so dass es auf einen seitlich neben dem Schlammabfuhrbehälter 1b bzw. des diesen aufnehmenden Fahrzeugs platzierten Lagerplatz oder Behälter abgeworfen werden kann.

Die Austragschneckenanordnung 15 enthält einen einer Austragschnecke 16 zugeordneten, einen Auslass aufweisenden bzw. zu einem Auslass führenden Trog 17, der im dargestellten Beispiel mittels der Schüttblende 14 mit dem nach hinten ausgebrachten Räumgut beaufschlagbar ist, d.h. der Schüttblende zu- bzw. nachgeordnet ist. Um zu verhindern, dass das dem Trog 17 zugeführte Räumgut über die von der Schüttblende 14 und dementsprechend vom dem Trog 17 zugewandten Ende der Förderschnecken 3a, 3b abgewandte Seitenwand des Trogs 17 hinausfällt, ist dieser Seitenwand eine auf- und abklappbare, tafelförmige Schutzblende 18 zugeordnet, durch welche die Höhe der genannten Seitenwand vergrößerbar ist. Die Seitenwand 18 erstreckt sich zweckmäßig über die Breite der hinteren Öffnung 12 des Schlammabfuhrbehälters 1b.

Im dargestellten Beispiel besitzt die Austragschneckenanordnung 15 zwei jeweils einen Abschnitt der Förderschnecke 16 und einen Abschnitt des Trogs 17 enthaltende Abschnitte, nämlich einen ersten, etwas über die Breite des Schmutzabfuhrbehälters 1b bzw. dessen Öffnung 12 durchgehenden, jedoch nicht über die Breite des diesen aufnehmenden Fahrzeugs hinausragenden Abschnitt 15b und einen zweiten, schwenkbar hieran angebrachten Abschnitt 15b, der von einer der Fig. 1 zugrunde liegenden, an den ersten Abschnitt anschließenden Arbeitsstellung in eine stehende Fahrstellung hochgeschwenkt werden kann, wie in Fig. 1 durch einen Schwenkpfeil angedeutet ist. Hierdurch ist es möglich, das ausgebrachte Räumgut mit größerem Abstand neben dem Schmutzabfuhrbehälter 1b bzw. dem diesen aufnehmenden Fahrzeug abzulagern bzw. in die Mitte eines neben dem Schlammabfuhrbehälter 1b bzw. dem diesen aufnehmenden Fahrzeug abgestellten Behälter einzuwerfen, was eine gute Platzausnutzung gewährleistet.

Den Austragschneckenabschnitten der beiden Abschnitte der Austragschneckenanordnung 15 können eigene Antriebsmotoren zugeordnet sein. Im dargestellten Beispiel ist ein gemeinsamer, vorzugsweise als Hydraulikmotor ausgebildeter Antriebsmotor 19 vorgesehen, der im Bereich des vom schwenkbaren Abschnitt 15b abgewandten Endes der Austragschneckenanordnung 15 vorgesehen ist. Die beiden Schneckenabschnitte sind dementsprechend einfach durch beim Hochklappen des Abschnitts 15b außer Eingriff und beim Abklappen des Abschnitts 15b in gegenseitigen Eingriff bringbare Kupplungsklauen miteinander kuppelbar.

## Patentansprüche

1. Kanal- oder/und Straßenreinigungsvorrichtung mit wenigstens einem fassförmigen Schmutzabfuhrbehälter (1b) zur Aufnahme und zum Transport von bei der Kanal- oder/und Straßenreinigung anfallenden mineralischen Rückständen, wobei zum Ausräumen des Schmutzabfuhrbehälters (1b) eine diesem zugeordnete Räumeinrichtung vorgesehen ist, die eine in Längsrichtung des Schmutzabfuhrbehälters (1b) sich erstreckende, mit einer Drehantriebseinrichtung versehene Förderschneckenanordnung aufweist, die auf einem um eine in Behälterlängsrichtung verlaufende Achse schwenkbar angeordneten, mittels eines Schwenkantriebs (7) schwenkbaren Schwenkrahmen (6) aufgenommen ist, mittels dessen die Förderschneckenanordnung gegenüber einer der Behältersohle zugeordneten Mittelstellung beidseitig entlang der Behälterwandung (5) auslenkbar ist, **dadurch gekennzeichnet, dass** die Förderschneckenanordnung der Räumeinrichtung zwei symmetrisch zu einer Mittellängsebene des Schwenkrahmens (6) auf diesem aufgenommene Förderschnecken (3a, 3b) aufweist, die zwischen sich einen Spalt (4) begrenzen und zum Transport der mineralischen Rückstände entlang der Innenseite der Behälterwandung (5) zusammenwirken.

2. Kanal- oder/und Straßenreinigungsvorrichtung nach Anspruch 1, **dadurch gekennzeichnet, dass** die beiden Förderschnecken (3a, 3b) gegenläufig gewendelt und mit im Bereich der Behälterwandung (5) einander zugewandter Drehrichtungen gegenläufig antreibbar sind.

3. Kanal- oder/und Straßenreinigungsvorrichtung nach einem der vorhergehenden Ansprüche, **dadurch gekennzeichnet, dass** die beiden Förderschnecken (3a, 3b) mittels eines jeweils zugeordneten, vorzugsweise als Hydraulikmotor ausgebildeten Antriebsmotors (10) einzeln antreibbar sind.

4. Kanal- oder/und Straßenreinigungsvorrichtung nach einem der vorhergehenden Ansprüche, **dadurch gekennzeichnet, dass** der die Förderschnecken (3a, 3b) aufnehmende Schwenkrahmen (6) gegenüber seiner Mittelstellung um einen Winkel auslenkbar ist, der kleiner als 90°, vorzugsweise um die Hälfte des Winkelversatzes der beiden Förderschnecken (3a, 3b) auf dem Schwenkrahmen (6) kleiner als 90° ist.

5. Kanal- oder/und Straßenreinigungsvorrichtung nach einem der vorhergehenden Ansprüche, **dadurch gekennzeichnet, dass** der die beiden Förderschnecken (3a, 3b) aufnehmende Schwenkrahmen (6) zwei parallele, in Längsrichtung der Förderschnecken (3a, 3b) voneinander beabstandete, um eine in Behälterlängsrichtung verlaufende Achse vorzugsweise um die Mittellängsachse des Schmutzabfuhrbehälters (1b) schwenkbare Lagerschilde (9) aufweist, die eine zur Behälterwandung (5) hin sich verbreiternde Form aufweisen und auf denen die beiden Förderschnecken (3a, 3b) mit den Spalt (4) bildendem Abstand gelagert sind.

6. Kanal- oder/und Straßenreinigungsvorrichtung nach Anspruch 5, **dadurch gekennzeichnet, dass** die Lagerschilde (9) einen dem Spalt (4) zugeordneten Ausschnitt (11) aufweisen.

7. Kanal- oder/und Straßenreinigungsvorrichtung nach Anspruch 5 oder 6, **dadurch gekennzeichnet, dass** der Abstand der beiden Lagerschilde (9) kleiner als die Länge der hierauf gelagerten Förderschnecken (3a, 3b) ist, wobei ein Lagerschild vorzugsweise im Bereich einer hinteren Öffnung (12) des Schmutzabfuhrbehälters (1b) angeordnet ist.

8. Kanal- oder/und Straßenreinigungsvorrichtung nach einem der vorhergehenden Ansprüche, **dadurch gekennzeichnet, dass** der Schmutzabfuhrbehälter (1b) im Bereich seines hinteren Endes eine mittels eines Schwenkdeckels (13) verschließbare Öffnung aufweist, der eine das Behälterende unterfassende und seitlich flankierende Schüttblende (14) zugeordnet ist, die vorzugsweise als Rutsche ausgebildet ist.

9. Kanal- oder/und Straßenreinigungsvorrichtung nach einem der vorhergehenden Ansprüche, **dadurch gekennzeichnet, dass** den Förderschnecken (3a, 3b) eine quer hierzu verlaufende, im Bereich des hinteren Endes des Schmutzabfuhrbehälters (1b) angeordnete Austragschneckenanordnung (15) nachgeordnet ist, die eine in einem der Öffnung (12) des Schlammabfuhrbehälters (1) benachbarten, vorzugsweise mittels der Schüttblende (14) beaufschlagbaren Trog (17) der einen Auslass aufweist, laufende Austragschnecke (17) aufweist.

10. Kanal- oder/und Straßenreinigungsvorrichtung nach Anspruch 9, **dadurch gekennzeichnet, dass** die quer zu den Förderschnecken (3a, 3b) angeordnete Austragschneckenanordnung (15) über ihrer Länge unterteilbar ist und einen von einer liegenden Arbeitsstellung in eine stehende Fahrstellung hochstellbaren, in der Arbeitsstellung über den Schmutzabfuhrbehälter (15) seitlich hinausragenden Verlängerungsabschnitt (15b) aufweist.

11. Kanal- oder/und Straßenreinigungsvorrichtung nach Anspruch 10, **dadurch gekennzeichnet, dass** die beiden Schneckenabschnitte der Austragschneckenanordnung (15) mittels eines gemeinsamen Antriebsmotors (19) antreibbar und mittels einer durch die Schwenkbewegung des Verlängerungsabschnitts (15b) in- und außer Eingriff bringbare Klauenkupplung miteinander kuppelbar sind.

12. Kanal- oder/und Straßenreinigungsvorrichtung nach einem der Ansprüche 9 bis 11, **dadurch gekennzeichnet, dass** an der vom Schmutzabfuhrbehälter (1b) abgewandten Seitenwand des Trogs (17) zur Erhöhung dieser Seitenwand eine klappbare Schutzblende (18) vorgesehen ist.

13. Kanal- oder/und Straßenreinigungsvorrichtung nach Anspruch 1, **dadurch gekennzeichnet, dass** der die beiden Förderschnecken (3a, 3b) aufnehmende Schwenkrahmen (6) zwei parallele, in Längsrichtung der Förderschnecken (3a, 3b) voneinander beabstandete, um eine in Behälterlängsrichtung verlaufende Achse vorzugsweise um die Mittellängsachse des Schmutzabfuhrbehälters (1b) schwenkbare Lagerschilde (9) aufweist, die eine zur Behälterwandung (5) hin sich verbreiternde Form aufweisen und auf denen die beiden Förderschnecken (3a, 3b) mit den Spalt (4) bildendem Abstand gelagert sind, wobei zumindest das dem hinteren Ende des Schmutzabfuhrbehälters (1b) zugewandte Lagerschild (9) einen dem Spalt (4) zugeordneten, torförmigen Ausschnitt (11) weist, der am der Innenseite der Behälterwandung (5) zugewandten Rand des Lagerschilds (9) offen ist.

## Claims

1. Sewer and/or road cleaning device having at least one drum-shaped dirt removal container (1b) for receiving and transporting mineral residues obtained during sewer and/or road cleaning, wherein for clearing the dirt removal container (1b) a clearing device associated therewith is provided, which has a screw conveyor arrangement which extends in the longitudinal direction of the dirt removal container (1b) and which is provided with a rotary drive device and is accommodated on a pivot frame (6) which is pivotably arranged on an axis extending in the longitudinal direction of the container and which can be pivoted by means of a pivoting drive (7) and by means of which the screw conveyor arrangement can be deflected on both sides along the container wall (5) relative to a central position assigned to the container base, **characterized in that** the screw conveyor arrangement of the clearing device has two screw conveyors (3a, 3b) which are received on the pivot frame (6) symmetrically relative to a central longitudinal plane thereof and delimit a gap (4) between themselves and interact for transporting the mineral residues along the inner side of the container wall (5).

2. Sewer and/or road cleaning device according to claim 1, **characterized in that** the two screw conveyors (3a, 3b) are helically wound in opposite directions and can be driven in opposite directions with directions of rotation facing one another in the region of the container wall (5).

3. Sewer and/or road cleaning device according to one of the preceding claims, **characterized in that** the two screw conveyors (3a, 3b) can be driven individually by means of a respectively assigned drive motor (10), preferably in the form of a hydraulic motor.

4. Sewer and/or road cleaning device according to one of the preceding claims, **characterized in that** the pivot frame (6) accommodating the screw conveyors (3a, 3b) can be deflected relative to its central position by an angle which is smaller than 90°, preferably by half the angular offset of the two screw conveyors (3a, 3b) on the pivot frame (6) and smaller than 90°.

5. Sewer and/or road cleaning device according to one of the preceding claims, **characterized in that** the pivot frame (6) accommodating the two screw conveyors (3a, 3b) comprises two parallel bearing shields (9) which are spaced from one another in the longitudinal direction of the screw conveyors (3a, 3b), which can be pivoted about an axis extending in the longitudinal direction of the container, preferably about the central longitudinal axis of the dirt removal container (1b), and which have a shape which widens towards the container wall (5) and on which the two screw conveyors (3a, 3b) are mounted with a spacing forming the gap (4).

6. Sewer and/or road cleaning device according to claim 5, **characterized in that** the bearing shields (9) have a cutout (11) assigned to the gap (4).

7. Sewer and/or road cleaning device according to claim 5 or 6, **characterized in that** the distance between the two bearing shields (9) is smaller than the length of the screw conveyors (3a, 3b) mounted thereon, wherein one bearing shield is preferably arranged in the region of a rear opening (12) of the dirt removal container (1b).

8. Sewer and/or road cleaning device according to one of the preceding claims, **characterized in that** the dirt removal container (1b) has in the region of its rear end an opening which can be closed by means of a swivel lid (13) and which is associated with a pouring screen (14) which engages beneath and laterally flanks the container end and is preferably constructed as a chute.

9. Sewer and/or road cleaning device according to one of the preceding claims, **characterized in that** the conveyor screws (3a, 3b) are provided downstream with a discharge screw arrangement (15) extending transversely thereto and arranged in the region of the rear end of the dirt removal container (1b), said discharge screw arrangement having a discharge screw (17) which runs into a trough (17) having an outlet and is disposed adjacent to the opening (12) of the dirt removal container (1) and which can preferably be acted upon by means of the pouring screen (14).

10. Sewer and/or road cleaning device according to claim 9, **characterized in that** the discharge screw arrangement (15) arranged transversely to the conveyor screws (3a, 3b) can be subdivided over its length and has an extension section (15b) which can be raised from a lying working position into an upright driving position and in the working position projects laterally beyond the dirt removal container (15).

11. Sewer and/or road cleaning device according to claim 10, **characterized in that** the two screw sections of the discharge screw arrangement (15) can be driven by means of a common drive motor (19) and can be coupled together by means of a claw coupling which can be brought into and out of engagement by the pivoting movement of the extension section (15b).

12. Sewer and/or road cleaning device according to one of claims 9 to 11, **characterized in that** a foldable protective screen (18) is provided on the side wall of the trough (17) facing away from the dirt removal container (1b) for raising this side wall.

13. Sewer and/or road cleaning device according to claim 1, **characterized in that** the pivot frame (6) receiving the two screw conveyors (3a, 3b) has two parallel bearing shields (9) which are spaced apart from one another in the longitudinal direction of the screw conveyors (3a, 3b) and are pivotable about an axis extending in the longitudinal direction of the container, preferably about the central longitudinal axis of the dirt removal container (1b), and which have a shape widening towards the container wall (5) and on which the two screw conveyors (3a, 3b) are mounted with a spacing forming the gap (4), wherein at least the bearing shield (9) facing the rear end of the dirt removal container (1b) has a gate-shaped cutout (11) which is assigned to the gap (4) and is open at the edge of the bearing shield (9) facing the inside of the container wall (5).

## Revendications

1. Dispositif pour le nettoyage de canalisations et/ou de rues avec au moins un réservoir d'évacuation de la saleté (1b) en forme de fût pour la collecte et le transport de résidus minéraux produits lors du nettoyage de canalisations et/ou de rues, une installation de vidage étant associée au réservoir d'évacuation de la saleté (1b) pour vider celui-ci, laquelle comprend un arrangement de vis sans fin qui s'étend dans le sens de la longueur du réservoir d'évacuation de la saleté (1b) et qui est munie d'une installation d'entraînement en rotation reçue sur un cadre basculant (6) disposé de façon basculante autour d'un axe orienté dans le sens de la longueur du réservoir et pouvant basculer au moyen d'un entraînement basculant (7) autour d'un axe, au moyen duquel la disposition de vis sans fin peut être déviée le long de la paroi du réservoir (5) de part et d'autre d'une position au centre associée au fond du réservoir, **caractérisé en ce que** la disposition de vis sans fin de l'installation de vidage présente deux vis de transport (3a, 3b) disposées sur le cadre basculant (6) de façon symétrique par rapport à l'axe longitudinal médian de celui-ci, qui délimitent entre elles un intervalle (4) et qui coopèrent pour transporter les résidus minéraux le long de la face intérieure du paroi du réservoir (5).

2. Dispositif pour le nettoyage de canalisations et/ou de rues selon la revendication 1, **caractérisé en ce que** les deux vis de transport (3a, 3b) s'enroulent en sens inverse l'une de l'autre et peuvent entraînées dans un sens de rotation inverse l'une de l'autre au niveau de la paroi du réservoir (5).

3. Dispositif pour le nettoyage de canalisations et/ou de rues selon l'une des revendications précédentes, **caractérisé en ce que** les deux vis de transport (3a, 3b) peuvent être entraînées séparément au moyen d'un moteur d'entraînement (10) associé à chacune d'elle et conçu de préférence comme un moteur hydraulique.

4. Dispositif pour le nettoyage de canalisations et/ou de rues selon l'une des revendications précédentes, **caractérisé en ce que** le cadre basculant (6) qui reçoit les vis de transport (3a, 3b) peut être dévié par rapport à une position au centré selon un angle inférieur à 90°, de préférence inférieur à 90° de la moitié du décalage angulaire des deux vis de transport (3a, 3b) sur le cadre basculant (6).

5. Dispositif pour le nettoyage de canalisations et/ou de rues selon l'une des revendications précédentes, **caractérisé en ce que** le cadre basculant (6) qui reçoit les deux vis de transport (3a, 3b) présente deux flasques (9) parallèles, écartés l'un de l'autre dans le sens de la longueur de la vis de transport (3a, 3b) et capable de basculer autour d'un axe orienté dans le sens de la longueur du réservoir, de préférence autour de l'axe longitudinal médian du réservoir d'évacuation de la saleté (1b), qui ont une forme qui s'élargit vers la paroi du réservoir (5) et sur lesquels les deux vis de transport (3a, 3b) sont supportées à la distance formant l'intervalle (4).

6. Dispositif pour le nettoyage de canalisations et/ou de rues selon la revendication 5, **caractérisé en ce que** les flasques (9) présentent une découpe (11) associée à l'intervalle (4).

7. Dispositif pour le nettoyage de canalisations et/ou de rues selon la revendication 5 ou 6, **caractérisé en ce que** la distance entre les deux flasques (9) est inférieure à la longueur des vis de transport (3a, 3b) supportées dessus, un flasque étant de préférence disposé au niveau d'une ouverture postérieure (12) du réservoir d'évacuation de la saleté (1b).

8. Dispositif pour le nettoyage de canalisations et/ou de rues selon l'une des revendications précédentes, **caractérisé en ce que** le réservoir d'évacuation de la saleté (1b) présente au niveau de son extrémité arrière une ouverture pouvant être fermée au moyen d'un couvercle pivotant (13), qui est associée à une trémie (14) passant sous l'extrémité du réservoir et le flanquant sur les côtés, qui est de préférence conçue comme une glissière.

9. Dispositif pour le nettoyage de canalisations et/ou de rues selon l'une des revendications précédentes, **caractérisé en ce que** les vis de transport (3a, 3b) sont disposées à la suite d'une disposition de vis d'extraction (15) disposée à l'extrémité arrière du réservoir d'évacuation de la saleté (1b), qui présente une vis d'extraction (17) tournant dans une auge (17) voisine de l'ouverture (12) du réservoir d'évacuation des boues (1), qui reçoit de préférence des matières passant par la trémie (14) et présente une évacuation.

10. Dispositif pour le nettoyage de canalisations et/ou de rues selon la revendication 9, **caractérisé en ce que** la disposition de vis sans fin d'extraction (15) disposée transversalement par rapport aux vis de transport (3a, 3b) peut être subdivisée sur sa longueur et présente une section de rallonge (15b) qui peut être relevée d'une position de travail horizontale à une position de déplacement verticale et dépasse latéralement dans la position de travail au-delà du réservoir d'évacuation de la saleté (15).

11. Dispositif pour le nettoyage de canalisations et/ou de rues selon la revendication 10, **caractérisé en ce que** les deux sections de vis sans fin de la disposition de vis sans fin d'extraction (15) peuvent être entraînées au moyen d'un moteur d'entraînement commun (19) et couplées l'une à l'autre au moyen d'un accouplement à griffes qui peut être mis en prise et dégagé par un mouvement de bascule de la section de rallonge (15b).

12. Dispositif pour le nettoyage de canalisations et/ou de rues selon l'une des revendications 9 à 11, **caractérisé en ce qu'**il est prévu sur la paroi latérale de l'auge (17) opposée au réservoir d'évacuation de la saleté (1b) un volet de protection rabattable (18) qui surélève cette paroi latérale.

13. Dispositif pour le nettoyage de canalisations et/ou de rues selon la revendication 1, **caractérisé en ce que** le cadre basculant (6) qui reçoit les deux vis de transport (3a, 3b) présente deux flasques (9) parallèles, écartés l'un de l'autre dans le sens de la longueur des vis de transport (3a, 3b) et capables de basculer autour d'un axe orienté dans le sens de la longueur du réservoir, de préférence autour de l'axe longitudinal médian du réservoir d'évacuation de la saleté (1b), qui ont une forme qui s'élargit vers la paroi du réservoir (5) et sur lesquels les deux vis de transport (3a, 3b) sont supportées à la distance formant l'intervalle (4), le flasque (9) tourné vers l'extrémité arrière du réservoir d'évacuation de la saleté (1b), au minimum, présentant une découpe (11) en forme de porte associée à l'intervalle (4), qui s'ouvre sur le bord du flasque (9) tourné vers la face intérieure du paroi du réservoir (5).
